# FASCICULE DE BREVET EUROPEEN

(11) **EP 3 571 786 B1**
(45) Date de publication et mention de la délivrance du brevet: **10.03.2021**
(21) Numéro de dépôt: 18700503.8
(22) Date de dépôt: 19.01.2018
(51) Int. Cl.: H04B 7/185, H04B 7/204

(54) **ARCHITECTURE DE CHARGE UTILE D'UN SATELLITE DE TÉLÉCOMMUNICATIONS**
NUTZLASTARCHITEKTUR EINES TELEKOMMUNIKATIONSSATELLITEN
PAYLOAD ARCHITECTURE OF A TELECOMMUNICATIONS SATELLITE

(30) Priorité: 20.01.2017 FR 1750476
(43) Date de publication de la demande: 27.11.2019
(73) Titulaire: Airbus Defence and Space SAS, 31402 Toulouse Cedex 4 (FR)
(72) Inventeur: JACQUEY, Nicolas, 31402 Toulouse Cedex 4 (FR)
(74) Mandataire: Ipside
(86) Numéro de dépôt international: PCT/EP2018/051301
(87) Numéro de publication internationale: WO 2018/134351

(56) Documents cités:
- EP-A1- 0 464 765
- EP-A2- 0 889 605
- WO-A1-01/01606
- GB-A- 2 315 644
- US-A- 4 381 562
- US-B1- 6 377 561

## Description

### DOMAINE TECHNIQUE

La présente invention appartient au domaine des systèmes de télécommunications par satellite, et concerne une charge utile de satellite ainsi qu'un satellite comportant une telle charge utile.

### ÉTAT DE LA TECHNIQUE

De manière conventionnelle, un satellite de télécommunications comporte une charge utile équipée de moyens adaptés à échanger des données avec une ou plusieurs stations passerelles terrestres, et avec un ou plusieurs terminaux utilisateurs terrestres. Par « terrestre », on entend à la surface de la Terre, notamment à même le sol, en haut d'un bâtiment, d'un pylône, etc., immobile ou mobile (véhicule terrestre, maritime ou aéronautique).

Chaque station passerelle réalise, pour le satellite, un point d'accès à un cœur de réseau terrestre. Ainsi, une station passerelle qui reçoit, à partir du cœur de réseau, des données à destination d'un terminal utilisateur les émet à destination du satellite qui les retransmet à destination dudit terminal utilisateur. De manière analogue, le terminal utilisateur peut émettre des données à destination du satellite, qui les retransmet à destination d'une station passerelle, qui les retransmet vers le cœur de réseau.

De nos jours, il existe un besoin important d'augmenter la capacité des systèmes de télécommunications par satellite, notamment pour offrir des services haut débit, dits à bande large (« broadband » dans la littérature anglo-saxonne), et/ou pour desservir plus de terminaux utilisateurs, etc. De préférence, une telle augmentation de capacité doit s'accompagner d'une grande flexibilité et/ou d'une grande couverture géographique. En effet, de nos jours un satellite peut être mis à poste sans savoir exactement les zones géographiques qui devront être desservies, lesquelles zones géographiques sont en outre susceptibles de varier au cours de la vie dudit satellite.

Toutefois, une telle augmentation de la capacité et/ou de la flexibilité et/ou de la couverture géographique s'accompagne généralement, avec les architectures conventionnelles de charges utiles, d'une forte augmentation de la complexité, de la masse et du volume de la charge utile du satellite.

Document US4381562 décrit une charge utile d'un satellite de télécommunications selon l'état de l'art antérieur.

### EXPOSÉ DE L'INVENTION

La présente invention a pour objectif de remédier à tout ou partie des limitations des solutions de l'art antérieur, notamment celles exposées ci-avant.

A cet effet, et selon un premier aspect, l'invention concerne une charge utile de satellite d'un système de télécommunications par satellite, ladite charge utile comportant un module de réception passerelle adapté à recevoir des données d'une station passerelle et un module d'émission utilisateur adapté à émettre lesdites données vers des terminaux utilisateurs terrestres. Le module d'émission utilisateur comporte :
- une matrice asymétrique de commutation comportant N ports d'entrée et N·M ports de sortie, ladite matrice asymétrique de commutation étant adaptée à router des signaux reçus sur lesdits N ports d'entrée vers un ensemble modifiable de N ports de sortie parmi les N-M ports de sortie, ladite matrice asymétrique de commutation comportant L sous-matrices asymétriques agencées en parallèle, chaque sous-matrice asymétrique comportant N/L ports d'entrée de la matrice asymétrique de commutation et N.M/L ports de sortie de ladite matrice asymétrique de commutation,
- une antenne multifaisceaux adaptée à former N·M faisceaux statiques comportant N·M ports d'entrée associés respectivement auxdits N·M faisceaux statiques, lesdits N·M ports d'entrée de l'antenne multifaisceaux étant reliés respectivement aux N·M ports de sortie de la matrice asymétrique de commutation,
- des amplificateurs de puissance intégrés dans l'antenne multifaisceaux ou agencés entre ladite antenne multifaisceaux et la matrice asymétrique de commutation.

En outre, ladite charge utile comporte un circuit de traitement numérique configuré pour dé-multiplexer des signaux reçus multiplexés par le module de réception passerelle, et pour répartir lesdits signaux sur des ports d'entrée différents de la matrice asymétrique de commutation.

Il est à noter que l'expression N·M signifie « N multiplié par M », de sorte que le nombre N·M est M fois supérieur à N. Ainsi, la charge utile comporte une matrice asymétrique de commutation agencée en entrée d'une antenne multifaisceaux. L'antenne multifaisceaux est adaptée à former des faisceaux statiques, c'est-à-dire des faisceaux qui ne peuvent pas être modifiés au cours du temps. Toutefois, le nombre de faisceaux pouvant être formés est supérieur (d'un facteur M) au nombre N de faisceaux pouvant être actifs simultanément. En d'autres termes, bien que le nombre de faisceaux statiques disponibles soit égal à N·M, seul un ensemble d'au plus N faisceaux sont simultanément actifs. L'ensemble de faisceaux actifs est cependant modifiable au cours du temps grâce à la matrice asymétrique de commutation.

Le grand nombre de faisceaux possibles permet d'avoir une grande diversité en termes de zones géographiques pouvant être desservies à la surface de la Terre. Ces zones géographiques ne peuvent pas être toutes desservies en même temps, mais il est possible de desservir si nécessaire toutes ces zones géographiques en modifiant au cours du temps l'ensemble de faisceaux actifs parmi les N·M faisceaux possibles, réalisant ainsi un saut de faisceaux actifs (ou « beam hopping » dans la littérature anglo-saxonne) jusqu'à avoir balayé les N·M faisceaux possibles.

Du fait que les faisceaux possibles sont statiques, l'antenne multifaisceaux est peu complexe à réaliser. En outre, du fait que l'amplification de puissance est réalisée en aval de la matrice asymétrique de commutation, les signaux à router sont à faible puissance et ladite matrice asymétrique de commutation peut être réalisée de manière plus simple et plus compacte que dans le cas d'un routage de signaux à forte puissance.

Enfin, la flexibilité de la charge utile est également assurée par un circuit de traitement numérique qui réalise à la fois le démultiplexage des signaux reçus par le module de réception passerelle, en particulier le démultiplexage fréquentiel dans le cas de signaux reçus multiplexés en fréquences, et la répartition desdits signaux sur les différents ports d'entrée de la matrice asymétrique de commutation. Du fait que ces traitements sont effectués en numérique, la flexibilité est importante d'un point de vue répartition sur les ports d'entrée de la matrice asymétrique de commutation, largeur de bande des signaux à répartir, fréquences centrales respectives des signaux répartis sur les ports d'entrée de la matrice asymétrique de commutation, etc.

Dans des modes particuliers de réalisation, la charge utile peut comporter en outre l'une ou plusieurs des caractéristiques suivantes, prises isolément ou selon toutes les combinaisons techniquement possibles.

Dans des modes particuliers de réalisation, l'antenne multifaisceaux est du type comportant un réflecteur et un réseau de sources à amplificateurs de puissance intégrés, chaque faisceau étant formé au moyen de plusieurs sources, des sources étant partagées entre plusieurs faisceaux.

De telles dispositions sont avantageuses en ce que, bien que l'antenne multifaisceaux puisse comporter un nombre potentiellement grand d'amplificateurs de puissance (un amplificateur de puissance par source), chaque amplificateur de puissance doit fournir une puissance inférieure à celle du faisceau à former, puisque la puissance d'un faisceau à former est fournie par plusieurs amplificateurs de puissance. Ainsi, le volume et la masse de chaque amplificateur de puissance est inférieur à ceux qu'il faudrait pour un amplificateur de puissance unique fournissant toute la puissance du faisceau. En outre, lesdits amplificateurs de puissance étant partagés entre plusieurs faisceaux, il en résulte une meilleure utilisation de la puissance embarquée dans la charge utile, par rapport au cas notamment d'une charge utile dans laquelle chaque amplificateur de puissance est utilisé pour un seul faisceau. En effet, du fait que seuls N faisceaux peuvent être actifs simultanément, l'utilisation d'un seul amplificateur de puissance par faisceau entraînerait qu'à tout instant, au moins (N·M - N) amplificateurs de puissance ne seraient pas utilisés. Dans le cas d'un partage d'amplificateurs de puissance, chaque amplificateur de puissance est plus souvent utilisé puisqu'il est susceptible d'être utilisé pour plusieurs faisceaux parmi les N·M faisceaux possibles, voire pour chacun desdits N·M faisceaux possibles.

Dans des modes particuliers de réalisation, la matrice asymétrique de commutation est constituée de commutateurs à semi-conducteurs.

En effet, du fait que les signaux à router sont à faible puissance, il est possible d'utiliser des commutateurs à semi-conducteurs (« solid state switch » dans la littérature anglo-saxonne) qui présentent l'avantage de permettre une intégration compacte, par exemple sous la forme d'un circuit intégré monolithique hyperfréquence (« Monolithic Microwave Integrated Circuit » ou MMIC dans la littérature anglo-saxonne), ainsi qu'une modification rapide et facile à commander du routage des signaux.

De telles dispositions permettent de simplifier la conception de la matrice asymétrique de commutation, en réduisant toutefois la flexibilité offerte par ladite matrice asymétrique de commutation puisqu'un signal reçu sur un port d'entrée ne peut être routé que vers N·M/L ports de sortie, parmi les N·M ports de sortie de ladite matrice asymétrique de commutation, qui dépendent de la sous-matrice asymétrique à laquelle appartient ledit port d'entrée sur lequel est reçu le signal à router. Toutefois, le circuit de traitement numérique peut choisir de router un signal vers n'importe lequel des ports d'entrée de la matrice asymétrique de commutation, de sorte qu'un signal reçu du module de réception passerelle peut toujours être routé vers l'un quelconque des N·M faisceaux possibles.

Dans des modes particuliers de réalisation, la charge utile comporte au moins deux modules de réception passerelle, adaptés à recevoir des données émises par des stations passerelles respectives différentes, reliés à des ports d'entrée respectifs différents du circuit de traitement numérique.

Une telle charge utile permet une grande flexibilité puisque les signaux reçus de l'une quelconque des stations passerelles peuvent être routés vers l'un quelconque des N·M faisceaux possibles.

Dans des modes particuliers de réalisation, l'un au moins des modules de réception passerelle est adapté à recevoir des données sous la forme de signaux optiques.

Ainsi, la charge utile est configurée pour échanger des données, avec des stations passerelles optiques, sous la forme de signaux optiques. Par « signal optique », on entend une onde électromagnétique dont les longueurs d'ondes sont comprises entre 0,4 micromètres (µm) et 11 µm.

L'utilisation d'une liaison optique pour les échanges de données entre la charge utile du satellite et les stations passerelles présente de nombreux avantages. Notamment, une liaison optique permet d'avoir des débits de données très élevés, et l'utilisation de bandes de fréquences optiques ne nécessite pas de requérir une autorisation administrative préalable.

Dans des modes particuliers de réalisation, la charge utile comporte au moins un module de réception passerelle adapté à recevoir des données sous la forme de signaux optiques et au moins un module de réception passerelle adapté à recevoir des données sous la forme de signaux radioélectriques.

Dans des modes particuliers de réalisation, l'un au moins des modules de réception passerelle est adapté à recevoir des données sous la forme de signaux radioélectriques et comporte une antenne de réception montée sur des moyens de pointage mécaniques adaptés à modifier une direction de pointage de ladite antenne de réception.

De telles dispositions sont avantageuses en ce que, pour un satellite à poste en orbite terrestre comportant une telle charge utile, il est possible d'ajouter une station passerelle terrestre pour augmenter la capacité du système de télécommunications par satellite. Une telle station passerelle peut en outre être ajoutée dans une zone géographique qui n'était pas connue a priori lors de la mise à poste dudit satellite, puisque la direction de pointage de l'antenne de réception peut être modifiée.

Dans des modes particuliers de réalisation, le circuit de traitement numérique est configuré pour dé-multiplexer des signaux reçus multiplexés en fréquences par le module de réception passerelle, et pour répartir lesdits signaux sur des ports d'entrée différents de la matrice asymétrique de commutation.

Dans des modes particuliers de réalisation, le circuit de traitement numérique est configuré pour adapter des filtres numériques de démultiplexage des signaux reçus à la largeur fréquentielle des spectres desdits signaux reçus.

Dans des modes particuliers de réalisation, N est égal ou supérieur à 100 et M est égal ou supérieur à 10.

En effet, la présente invention présente l'avantage de pouvoir offrir un nombre très important de faisceaux sans augmenter de manière trop importante la complexité, la masse et le volume de la charge utile. L'invention est toutefois applicable à un nombre N·M quelconque de faisceaux possibles ainsi qu'à un nombre N quelconque de faisceaux actifs (N > 1, M > 1).

Selon un second aspect, l'invention concerne un satellite d'un système de télécommunications par satellite, comportant une charge utile selon l'un quelconque des modes de réalisation de l'invention.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un exemple de système de télécommunications par satellite,
- Figure 2: une représentation schématique d'un exemple de réalisation d'une charge utile multifaisceaux de satellite,
- Figure 3: une représentation schématique d'un exemple de répartition de zones géographiques à la surface de la Terre desservies par des faisceaux respectifs différents de la charge utile multifaisceaux de la figure 2,
- Figure 4 : une représentation schématique d'un exemple de réalisation d'une matrice asymétrique de commutation de la charge utile multifaisceaux de la figure 2,
- Figures 5 et 6 : des représentations schématiques illustrant des exemples d'utilisation de la charge utile multifaisceaux,
- Figure 7 : une représentation schématique d'une première variante de réalisation de la charge utile multifaisceaux de la figure 2,
- Figure 8 : une représentation schématique illustrant un exemple d'utilisation de la charge utile multifaisceaux de la figure 7,
- Figure 9 : une représentation schématique d'une seconde variante de réalisation de la charge utile multifaisceaux de la figure 2.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

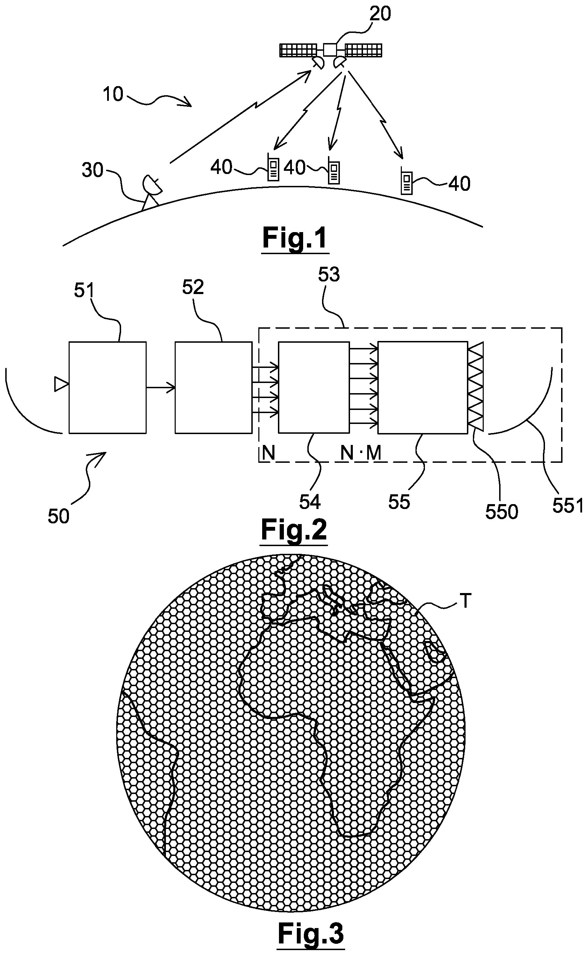

La figure 1 représente schématiquement un exemple de réalisation d'un système 10 de télécommunications par satellite.

Tel qu'illustré par la figure 1, le système 10 de télécommunications par satellite comporte au moins un satellite 20, au moins une station passerelle 30 terrestre et au moins un terminal utilisateur 40 terrestre.

Dans la suite de la description, on se place de manière non limitative dans le cas où le satellite 20 est en orbite géostationnaire (« Geostationary Orbit » ou GEO dans la littérature anglo-saxonne). Rien n'exclut cependant, suivant d'autres exemples, de considérer une orbite terrestre non géostationnaire, telle qu'une orbite basse altitude (« Low Earth Orbit » ou LEO), une orbite moyenne altitude (« Medium Earth Orbit » ou MEO), etc.

La figure 2 représente schématiquement un exemple de réalisation d'une charge utile 50 multifaisceaux destinée à être embarquée dans le satellite 20 du système 10 de télécommunications par satellite.

Tel qu'illustré par la figure 2, la charge utile 50 comporte notamment un module de réception passerelle 51, un module d'émission utilisateur 53 et un circuit de traitement numérique 52.

Le module de réception passerelle 51 est adapté à recevoir des données émises par la station passerelle 30. Le module de réception passerelle 51 comporte par exemple un ou plusieurs circuits radioélectriques adaptés à recevoir des données sous la forme de signaux radioélectriques, par exemple dans une ou plusieurs bandes de fréquences parmi les bandes Q, V, Ka, Ku, L, etc. Alternativement ou en complément, le module de réception passerelle 51 peut comporter un circuit optique adapté à recevoir des données sous la forme de signaux optiques. Il est à noter que le module de réception passerelle 51 peut comporter plusieurs circuits optiques permettant d'établir simultanément plusieurs liaisons optiques avec des stations passerelles 30 respectives différentes.

Le module d'émission utilisateur 53 est adapté à émettre des données à destination d'un ou de plusieurs terminaux utilisateurs 40. Le module d'émission utilisateur 53 comporte par exemple un ou plusieurs circuits radioélectriques adaptés à émettre des données sous la forme de signaux radioélectriques, par exemple dans une ou plusieurs bandes de fréquences parmi les bandes Q, V, Ka, Ku, L, etc.

Il est à noter que le module de réception passerelle 51 et le module d'émission utilisateur 53 peuvent fonctionner dans la même bande de fréquences, par exemple la bande Ka. Toutefois, dans des modes préférés de réalisation, le module de réception passerelle 51 et le module d'émission utilisateur 53 utilisent des bandes de fréquences différentes. En particulier, il est avantageux le cas échéant de considérer des bandes de fréquences plus élevées pour le module de réception passerelle 51 que pour le module d'émission utilisateur 53, par exemple les bandes respectivement Q/V et Ka.

Plus particulièrement, et tel qu'illustré par la figure 2, le module d'émission utilisateur 53 comporte une matrice asymétrique de commutation 54 et une antenne multifaisceaux 55. Le module d'émission utilisateur 53 comporte également des amplificateurs de puissance (non représentés sur les figures) qui sont intégrés dans l'antenne multifaisceaux 55 et/ou agencés entre l'antenne multifaisceaux 55 et la matrice asymétrique de commutation 54. Dans la suite de la description, on se place de manière non limitative dans le cas où les amplificateurs de puissance sont intégrés dans l'antenne multifaisceaux 55.

La matrice asymétrique de commutation 54 comporte par exemple N ports d'entrée et N·M ports de sortie (N > 1, M > 1). Ladite matrice asymétrique de commutation 54 est adaptée à router des signaux reçus sur lesdits N ports d'entrée vers un ensemble modifiable de N ports de sortie parmi les N·M ports de sortie. De préférence, la matrice asymétrique de commutation 54 est constituée de commutateurs à semi-conducteurs (« solid state switch » dans la littérature anglo-saxonne), et se présente par exemple sous la forme d'un ou de plusieurs circuits intégrés monolithiques hyperfréquences (« Monolithic Microwave Integrated Circuit » ou MMIC dans la littérature anglo-saxonne).

L'antenne multifaisceaux 55 est adaptée à former, en analogique, N·M faisceaux statiques. Par « faisceau statique », on entend que chaque faisceau est figé et ne peut pas être modifié au cours du temps de sorte que, notamment, la direction de pointage de chaque faisceau est invariante en repère satellite. Tel qu'illustré par la figure 2, l'antenne multifaisceaux 55 comporte N·M ports d'entrée associés respectivement auxdits N·M faisceaux statiques. Les N·M ports d'entrée de l'antenne multifaisceaux 55 sont reliés respectivement aux N·M ports de sortie de la matrice asymétrique de commutation 54, par exemple au moyen d'un réseau de formation de faisceaux (« Beam Forming Network » ou BFN dans la littérature anglo-saxonne) statique et analogique. Le fait d'avoir des faisceaux statiques rend une telle charge utile 50 plus simple à fabriquer (calibration moins complexe que dans le cas de faisceaux variables) et à opérer (quantité de données de contrôle à transmettre au satellite 20 moins importante que dans le cas de faisceaux variables).

Le circuit de traitement numérique 52 est configuré pour effectuer des traitements numériques sur des signaux reçus par le module de réception passerelle 51, et notamment pour dé-multiplexer les signaux reçus multiplexés par le module de réception passerelle 51, par exemple multiplexés en fréquences, et pour répartir lesdits signaux sur des ports d'entrée différents de la matrice asymétrique de commutation 54, parmi les N ports d'entrée de ladite matrice asymétrique de commutation. Le circuit de traitement numérique 52 comporte à cet effet un port d'entrée relié au module de réception passerelle 51 et N ports de sortie reliés respectivement aux N ports d'entrée de la matrice asymétrique de commutation 54.

De préférence, le circuit de traitement numérique 52 est également configuré pour commander ladite matrice asymétrique de commutation 54, c'est-à-dire pour sélectionner les N ports de sortie, parmi les N·M ports de sortie, vers lesquels sont routés les signaux reçus sur les N ports d'entrée de ladite matrice asymétrique de commutation 54.

Le circuit de traitement numérique 52 comporte un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter. Alternativement ou en complément, le circuit de traitement numérique 52 comporte un ou des circuits logiques programmables (FPGA, PLD, etc.), et/ou un ou des circuits intégrés spécialisés (ASIC, etc.), et/ou un ensemble de composants électroniques discrets, etc.

Le circuit de traitement numérique 52 comporte également un ou plusieurs convertisseurs analogique / numérique pour la conversion des signaux reçus du module de réception passerelle 51, et un ou plusieurs convertisseurs numérique / analogique pour la conversion des signaux à émettre par le module d'émission utilisateur 53.

En d'autres termes, le circuit de traitement numérique 52 comporte un ensemble de moyens configurés de façon logicielle (produit programme d'ordinateur spécifique) et/ou matérielle (FPGA, PLD, ASIC, composants électroniques discrets, etc.) pour dé-multiplexer les signaux reçus par le module de réception passerelle 51 et pour répartir lesdits signaux sur des ports de sortie différents dudit circuit de traitement numérique 52, c'est-à-dire sur des ports d'entrée différents de la matrice asymétrique de commutation 54 et, dans des modes particuliers de réalisation, pour commander la matrice asymétrique de commutation 54.

La figure 3 représente schématiquement un exemple de répartition, à la surface de la Terre T, des N·M zones géographiques desservies par les N·M faisceaux statiques de l'antenne multifaisceaux 55. Dans cet exemple, plusieurs cercles contigus sont représentés à la surface de la Terre T, chaque cercle représentant une zone géographique desservie par un faisceau statique. Dans cet exemple non limitatif, les faisceaux sont d'une largeur angulaire comprise entre 0.2° et 0.5°, de sorte que le nombre N·M de faisceaux statiques possibles est de l'ordre de quelques milliers, par exemple sensiblement égal à 3000. Le nombre M est par exemple égal à 10, de sorte que le nombre N de faisceaux statiques pouvant être activés simultanément est égal à 300.

Dans l'exemple non limitatif illustré par la figure 3, les N·M faisceaux desservent sensiblement toute la surface de la Terre visible depuis le satellite 20 en orbite GEO, et les zones géographiques respectives sont toutes différentes. Rien n'exclut cependant, suivant d'autres exemples, de desservir une surface inférieure de la Terre et/ou d'avoir plusieurs faisceaux qui desservent une même zone géographique.

En outre, dans l'exemple non limitatif illustré par la figure 3, les N·M faisceaux ont tous sensiblement la même largeur angulaire. Rien n'exclut cependant, suivant d'autres exemples, d'avoir des faisceaux avec des largeurs angulaires respectives qui ne sont pas toutes sensiblement les mêmes.

Dans des modes préférés de réalisation, l'antenne multifaisceaux 55 est du type comportant un réflecteur 551 et un réseau de sources 550 à amplificateurs de puissance intégrés, dans laquelle chaque faisceau est formé au moyen de plusieurs sources (« Multiple Feeds Per Beam » ou MFPB dans la littérature anglo-saxonne), et dans laquelle des sources sont partagées entre plusieurs faisceaux. Par exemple, l'antenne multifaisceaux 55 comporte une lentille de Rotman, de sorte que chaque source 550 contribue à la formation de chacun des N·M faisceaux statiques possibles.

Rien n'exclut cependant, suivant d'autres exemples, d'avoir une antenne multifaisceaux 55 dans laquelle chaque faisceau est formé au moyen d'une seule source (« Single Feed Per Beam » ou SFPB dans la littérature anglo-saxonne), en particulier si le nombre N·M de faisceaux possibles est inférieur à mille (< 1000), par exemple de l'ordre de quelques centaines.

Dans le cas où une couverture de toute la surface visible de la Terre est souhaitée, le réseau de sources 550 est préférentiellement décalé par rapport à un foyer du réflecteur 551 (« Defocused Array Fed Reflector » ou DAFR dans la littérature anglo-saxonne).

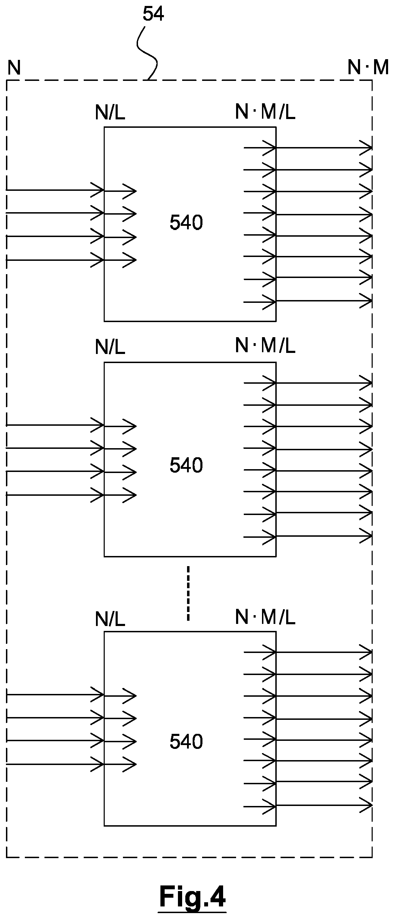

La figure 4 représente schématiquement une matrice asymétrique de commutation 54 selon un mode préféré de réalisation. Tel qu'illustré par la figure 4, dans ce mode de réalisation, la matrice asymétrique de commutation 54 est constituée de L sous-matrices asymétriques 540 agencées en parallèle (L > 1), de préférence identiques entre elles. Chaque sous-matrice asymétrique 540 comporte N/L ports d'entrée de la matrice asymétrique de commutation et N·M/L ports de sortie de ladite matrice asymétrique de commutation. Par exemple, chaque sous-matrice asymétrique 540 se présente sous la forme d'un circuit intégré monolithique hyperfréquence. Le nombre L de sous-matrices asymétriques 540 est par exemple de l'ordre de quelques dizaines.

Une telle architecture est avantageuse en ce qu'elle permet de simplifier la conception de la matrice asymétrique de commutation 54, en réduisant toutefois la flexibilité offerte par ladite matrice asymétrique de commutation. En effet, avec une telle architecture il n'est pas possible de router un signal reçu sur un port d'entrée vers un port de sortie quelconque parmi les N·M ports de sortie de la matrice asymétrique de commutation 54. Un signal reçu sur un port d'entrée de la matrice asymétrique de commutation 54 ne peut être routé que vers N·M/L ports de sortie parmi les N·M ports de sortie, qui dépendent de la sous-matrice asymétrique 540 à laquelle appartient ledit port d'entrée sur lequel est reçu le signal à router. En effet, les sous-matrices asymétriques 540 étant agencées en parallèle, chacun des N ports d'entrée de la matrice asymétrique de commutation 54 n'appartient qu'à une sous-matrice asymétrique 540 et chacun des N·M ports de sortie de ladite matrice asymétrique de commutation 54 n'appartient qu'à une sous-matrice asymétrique 540. Toutefois, le circuit de traitement numérique 52 peut toujours choisir de router un signal vers n'importe lequel des ports d'entrée de la matrice asymétrique de commutation (et donc vers n'importe laquelle des sous-matrices asymétriques 540), en choisissant le port de sortie correspondant du circuit de traitement numérique 52, de sorte qu'un signal reçu du module de réception passerelle 51 peut toujours être routé vers l'un quelconque des N·M faisceaux possibles, et ce avec une grande flexibilité.

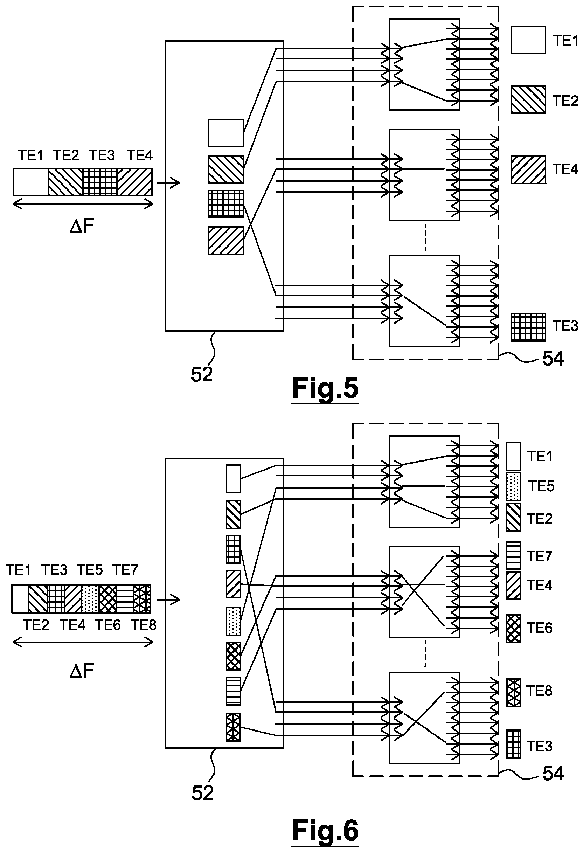

Les figures 5 et 6 représentent schématiquement des exemples d'utilisation de la charge utile de la figure 2, en considérant de manière non limitative la matrice asymétrique de commutation 54 de la figure 4.

Tel qu'illustré par la figure 5, le module de réception passerelle 51 reçoit d'une station passerelle 30 quatre signaux multiplexés en fréquences, destinés à quatre terminaux utilisateurs 40, respectivement TE1 à TE4, se trouvant dans des zones géographiques respectives desservies par des faisceaux différents. Ces quatre signaux sont reçus dans une bande de fréquences dédiée (c'est-à-dire différente des bandes de fréquences utilisées pour émettre des données avec les terminaux utilisateurs 40), par exemple en bande V. Ces quatre signaux occupent un spectre fréquentiel de largeur ΔF.

Ces quatre signaux sont numérisés par le circuit de traitement numérique 52, éventuellement après translation fréquentielle vers une bande de fréquences compatible dudit circuit de traitement numérique 52. Le circuit de traitement numérique 52 configure la matrice asymétrique de commutation 54 de sorte à associer les faisceaux desservant les zones géographiques dans lesquelles se trouvent les terminaux utilisateurs TE1 à TE4 à quatre ports d'entrée de ladite matrice asymétrique de commutation 54. Le circuit de traitement numérique 52 dé-multiplexe les quatre signaux reçus et les répartit sur les ports d'entrée de la matrice asymétrique de commutation 54 permettant d'émettre les signaux par les faisceaux desservant les terminaux utilisateurs TE1 à TE4 auxquels sont destinés lesdits signaux. Avant de les répartir sur les ports d'entrée de la matrice asymétrique de commutation 54, le circuit de traitement numérique 52 peut également appliquer des translations fréquentielles différentes auxdits signaux, afin par exemple d'adapter les signaux aux contraintes réglementaires dans les zones géographiques dans lesquelles se trouvent les terminaux utilisateurs TE1 à TE4.

La figure 5 représente un exemple d'utilisation sur un intervalle temporel donné, pour un démultiplexage et une répartition donnés des signaux par le circuit de traitement numérique 52 et un routage donné desdits signaux par la matrice asymétrique de commutation 54.

Toutefois, le démultiplexage, la répartition et le routage peuvent varier au cours du temps, et ce éventuellement avec une fréquence élevée, de l'ordre du kilohertz, permise notamment du fait que :
- de nombreux traitements sont effectués en numérique par le circuit de traitement numérique 52, et
- les signaux routés par la matrice asymétrique de commutation 54 sont à faible puissance, ce qui permet l'utilisation de commutateurs qui commutent rapidement, tels que des commutateurs à semi-conducteurs qui peuvent commuter beaucoup plus rapidement, et ce pendant toute la durée de vie du satellite, comparé par exemple à des commutateurs mécaniques utilisés pour des signaux à forte puissance,
- les matrices de commutateurs à semi-conducteurs N vers N.M sont plus simples à réaliser et à mettre en œuvre que des matrices à base de commutateurs ferrites.

La figure 6 représente un autre exemple d'utilisation de la même charge utile 50. Tel qu'illustré par la figure 6, le module de réception passerelle 51 reçoit à présent huit signaux multiplexés en fréquences, dont quatre signaux destinés aux mêmes quatre terminaux utilisateurs TE1 à TE4 de la figure 5, et quatre signaux destinés à quatre autres terminaux utilisateurs TE5 à TE8. Les terminaux utilisateurs TE1 à TE8 se trouvent dans des zones géographiques respectives desservies par des faisceaux différents. Ces huit signaux occupent un spectre fréquentiel de même largeur ΔF que sur la figure 5, de sorte notamment que les spectres des signaux destinés aux terminaux utilisateurs TE1 à TE4 présentent une largeur fréquentielle réduite par rapport à la figure 5.

Ces huit signaux sont numérisés par le circuit de traitement numérique 52, éventuellement après translation fréquentielle vers une bande de fréquences compatible dudit circuit de traitement numérique 52. Le circuit de traitement numérique 52 configure la matrice asymétrique de commutation 54 de sorte à associer les faisceaux desservant les zones géographiques dans lesquelles se trouvent les terminaux utilisateurs TE1 à TE8 à huit ports d'entrée de ladite matrice asymétrique de commutation 54. Le circuit de traitement numérique 52 dé-multiplexe les huit signaux reçus et les répartit sur les ports d'entrée de la matrice asymétrique de commutation 54 permettant d'émettre les signaux par les faisceaux desservant les terminaux utilisateurs TE1 à TE8 auxquels sont destinés lesdits signaux.

Ainsi, dans l'exemple illustré par la figure 6 :
- les signaux à destination des terminaux utilisateurs TE1 à TE4 sont routés de la même manière au niveau de la matrice asymétrique de commutation 54 que dans l'exemple illustré par la figure 5 ; il n'y a donc pas eu d'interruption de trafic pour ces terminaux utilisateurs TE1 à TE4,
- quatre nouveaux faisceaux ont été activés par rapport à l'exemple illustré par la figure 5, afin de desservir quatre nouveaux terminaux utilisateurs TE5 à TE8,
- le circuit de traitement numérique 52 a adapté les filtres numériques de démultiplexage des signaux reçus à la largeur fréquentielle des spectres desdits signaux, qui a été réduite par rapport à l'exemple illustré par la figure 5,
- grâce à la flexibilité offerte par la présente invention, la même station passerelle est capable de gérer les informations pour tous les faisceaux et à destination de tous les utilisateurs TE1 à TE8.

De manière plus générale, du fait que les traitements sont effectués en numérique par le circuit de traitement numérique 52, ceux-ci offrent une grande flexibilité. En particulier, en considérant que la bande de fréquences utilisée sur la liaison passerelle avec la station passerelle 30 est découpée en sous-bandes attribuables à des terminaux utilisateurs différents, dites « canaux passerelle », et en considérant que la ou les bandes de fréquences (par exemple la bande Ka et/ou la bande L) utilisées sur la liaison utilisateurs avec les terminaux utilisateurs 40 sont découpées en sous-bandes attribuables à des terminaux utilisateurs 40 différents, dites « canaux utilisateurs », alors le circuit de traitement numérique 52 est adapté à transférer chaque canal passerelle vers l'un quelconque des canaux utilisateurs, et en outre vers l'un quelconque des ports d'entrée de la matrice asymétrique de commutation 54.

Ce transfert réalisé par le circuit de traitement numérique 52 peut en outre être modifié en tout ou partie d'un intervalle temporel à un autre, de même que le routage réalisé par la matrice asymétrique de commutation 54. En effet, suivant la dimension temporelle, la charge utile 50 rend possible la réalisation :
- d'une couverture géographique fixe, continue ou discontinue à la surface de la Terre, en conservant le même ensemble de N faisceaux actifs d'un intervalle temporel à un autre (c'est-à-dire sans réaliser de sauts de faisceaux ou « beam hopping »),
- d'une couverture géographique fixe, continue ou discontinue à la surface de la Terre, associée à une couverture géographique variable, en conservant par exemple K (K < N) mêmes faisceaux actifs d'un intervalle temporel à un autre et en réalisant un saut de faisceaux pour (N - K) faisceaux, qui peuvent donc varier d'un intervalle temporel à un autre,
- d'une couverture géographique entièrement variable, en autorisant un saut de faisceaux sur chacun des N faisceaux à former.

Il est à noter que, dès lors qu'un saut de faisceaux est réalisé sur une partie au moins des N faisceaux, il est possible de desservir, au cours du temps, toutes les zones géographiques desservies par l'antenne multifaisceaux 55 du module d'émission utilisateur 53.

Le circuit de traitement numérique 52 permet de modifier le spectre alloué aux différents faisceaux et d'exclure une partie du spectre dans un faisceau donné, par exemple pour satisfaire à des contraintes réglementaires.

La flexibilité offerte par la présente invention permet au système 10 de télécommunications par satellite de s'adapter aux variations de trafic et d'allouer facilement plus ou moins de capacité à tel ou tel faisceau pendant un ensemble d'intervalles temporels.

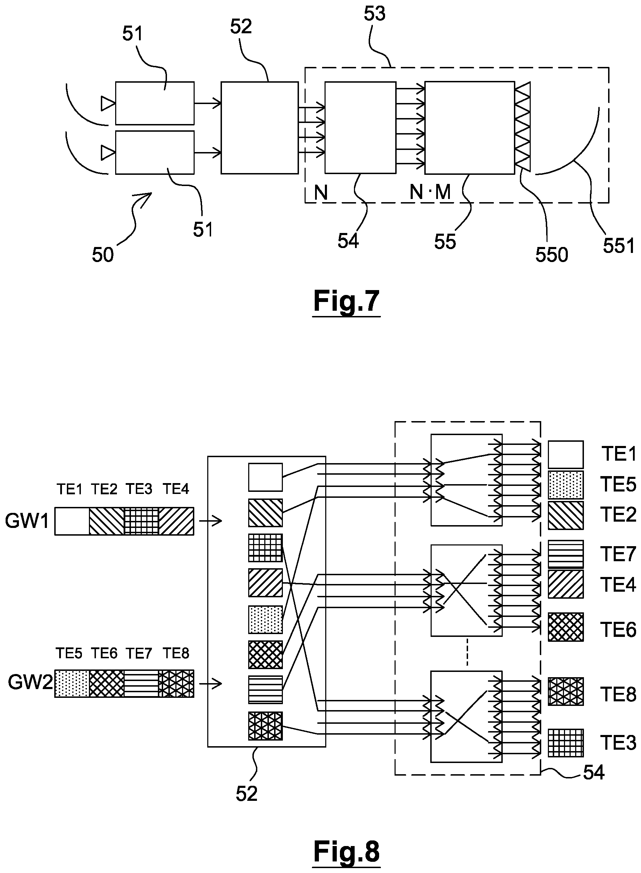

La figure 7 représente schématiquement une première variante de réalisation de la charge utile 50 de la figure 2.

Tel qu'illustré par la figure 7, la charge utile 50 comporte dans ce mode de réalisation deux modules de réception passerelle 51, adaptés à recevoir des données émises par des stations passerelles 30 respectives différentes, reliés à des ports d'entrée respectifs différents du circuit de traitement numérique 52.

Rien n'exclut suivant, d'autres exemples, de considérer un nombre de modules de réception passerelle 51 supérieur à deux, par exemple de l'ordre de quelques dizaines, afin de permettre la réception de données émises par un grand nombre de stations passerelles 30 et ainsi maximiser la capacité du système 10 de télécommunications par satellite.

Le circuit de traitement numérique 52 est configuré pour dé-multiplexer les signaux reçus multiplexés sur chaque port d'entrée, c'est-à-dire reçus de modules de réception passerelle 51 et de stations passerelles 30 différentes, et pour répartir lesdits signaux sur des ports d'entrée différents de la matrice asymétrique de commutation 54.

Ainsi, le circuit de traitement numérique 52 est adapté à transférer chaque canal passerelle sur l'un quelconque des ports d'entrée dudit circuit de traitement numérique 52 (c'est-à-dire reçu de l'une quelconque des stations passerelles 30) vers l'un quelconque des canaux utilisateurs et l'un quelconque des N ports de sortie dudit circuit de traitement numérique 52, et donc vers l'un quelconque des faisceaux grâce à la matrice asymétrique de commutation 54.

La figure 8 représente schématiquement un exemple d'utilisation de la charge utile de la figure 7, en considérant de manière non limitative la matrice asymétrique de commutation 54 de la figure 4.

Tel qu'illustré par la figure 8, un premier module de réception passerelle 51 reçoit d'une première station passerelle 30, désignée par GW1, quatre signaux multiplexés en fréquences, destinés à quatre terminaux utilisateurs 40, respectivement TE1 à TE4. En outre, un second module de réception passerelle 51 reçoit d'une seconde station passerelle 30, désignée par GW2, quatre signaux destinés à quatre autres terminaux utilisateurs TE5 à TE8. Les terminaux utilisateurs TE1 à TE8 se trouvent dans des zones géographiques respectives desservies par des faisceaux différents.

Ces huit signaux sont numérisés par le circuit de traitement numérique 52, éventuellement après translation fréquentielle vers une bande de fréquences compatible dudit circuit de traitement numérique 52. Le circuit de traitement numérique 52 configure la matrice asymétrique de commutation 54 de sorte à associer les faisceaux desservant les zones géographiques dans lesquelles se trouvent les terminaux utilisateurs TE1 à TE8 à huit ports d'entrée de ladite matrice asymétrique de commutation 54. Le circuit de traitement numérique 52 dé-multiplexe les huit signaux reçus et les répartit sur les ports d'entrée de la matrice asymétrique de commutation 54 permettant d'émettre les signaux par les faisceaux desservant les terminaux utilisateurs TE1 à TE8 auxquels sont destinés lesdits signaux.

Une telle flexibilité est particulièrement avantageuse en ce qu'elle permet notamment de réaliser un déploiement progressif de stations passerelles 30, c'est-à-dire d'ajouter une ou plusieurs stations passerelles 30 à un satellite 20 déjà à poste en orbite terrestre, afin d'augmenter la capacité du système 10 de télécommunications par satellite. Typiquement, un module de réception passerelle 51 destiné à échanger des données avec une station passerelle 30 dont la position est connue à l'avance peut comporter une antenne de réception dont la direction de pointage est fixe en repère satellite. Un module de réception passerelle 51 destiné à échanger des données avec une station passerelle 30 dont la position n'est pas connue à l'avance doit comporter une antenne de réception dont la direction pointage peut être modifiée. La direction de pointage d'une telle antenne de réception est par exemple modifiée au moyen d'un réseau de formation de faisceau variable, par des moyens de pointage mécaniques portant ladite antenne de réception, etc.

Dans des modes préférés de réalisation, l'un au moins des modules de réception passerelle 51 est adapté à recevoir des données sous la forme de signaux optiques, émis par une station passerelle 30 optique. L'utilisation d'une liaison optique pour les échanges de données entre la charge utile 50 du satellite 20 et au moins une station passerelle 30 optique présente de nombreux avantages. Notamment, une liaison optique permet d'avoir des débits de données très élevés, et l'utilisation de bandes de fréquences optiques ne nécessite pas de requérir une autorisation administrative préalable.

De préférence, la charge utile 50 comporte au moins un module de réception passerelle 51 radioélectrique et au moins un module de réception passerelle 51 optique. En cas d'absence de trajet optique entre le satellite 20 embarquant la charge utile 50 et la station passerelle 30 optique (par exemple du fait de la présence de nuages entre le satellite 20 et ladite station passerelle 30 optique), il n'est pas possible d'échanger des données avec la station passerelle 30 optique sous la forme de signaux optiques. Dans un tel cas, les échanges de données peuvent néanmoins se faire sous la forme de signaux radioélectriques à destination d'une station passerelle 30 radioélectrique, avec toutefois une capacité réduite par rapport à la capacité possible sur une liaison optique.

La présente invention a été décrite en considérant principalement une voie aller (« forward link » dans la littérature anglo-saxonne), c'est-à-dire un échange de données depuis une ou plusieurs stations passerelles 30 vers un ou plusieurs terminaux utilisateurs 40, par l'intermédiaire du satellite 20. Tout ce qui a été décrit auparavant est également applicable, alternativement ou en complément, sur une voie retour (« return link » dans la littérature anglo-saxonne), c'est-à-dire un échange de données depuis un ou plusieurs terminaux utilisateurs 40 vers une ou plusieurs stations passerelles 30, par l'intermédiaire du satellite 20.

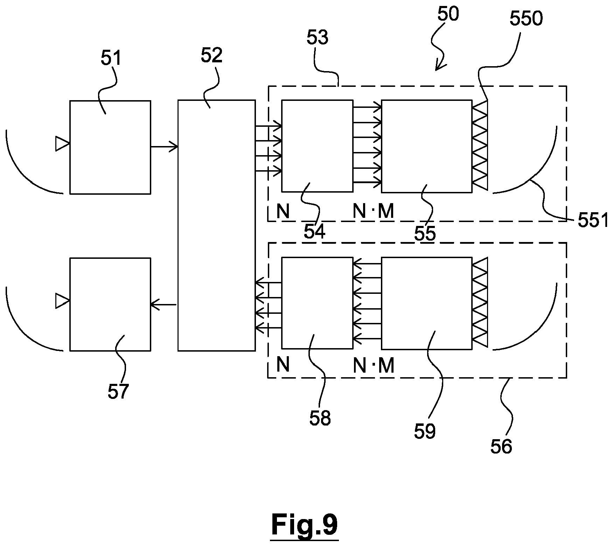

La figure 9 représente schématiquement une seconde variante de réalisation de la charge utile 50 de la figure 2, compatible avec l'un quelconque des modes de réalisation décrits précédemment. Tel qu'illustré par la figure 9, la charge utile 50 comporte au moins, outre les éléments décrits précédemment en référence à la figure 2 :
- un module d'émission passerelle 57 adapté à émettre des données à destination d'une station passerelle 30,
- un module de réception utilisateur 56 adapté à recevoir des données émises par un ou plusieurs terminaux utilisateurs 40.

Le module d'émission passerelle 57 et le module de réception utilisateur 56 peuvent prendre toute forme adaptée et, de préférence, se présentent sous des formes analogues à celles, respectivement, du module de réception passerelle 51 et du module d'émission utilisateur 53, et peuvent partager certains équipements avec ceux-ci. Par exemple, le module de réception utilisateur 56 comporte de préférence :
- une matrice asymétrique de commutation 58 comportant N·M ports d'entrée et N ports de sortie, ladite matrice asymétrique de commutation étant adaptée à connecter lesdits N ports de sortie à un ensemble modifiable de N ports d'entrée parmi les N·M ports d'entrée,
- une antenne multifaisceaux 59 adaptée à former N·M faisceaux statiques comportant N·M ports de sortie associés respectivement auxdits N·M faisceaux statiques, lesdits N·M ports de sortie de l'antenne multifaisceaux étant reliés respectivement aux N·M ports d'entrée de la matrice asymétrique de commutation 58,
- des amplificateurs faible bruit (non représentés sur les figures) intégrés dans l'antenne multifaisceaux 59.

En outre, le circuit de traitement numérique 52 est configuré pour multiplexer des signaux reçus sur les ports de sortie de la matrice asymétrique de commutation 58, et de les répartir sur un ou plusieurs modules d'émission passerelle 57 de la charge utile 50.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention décrite ci-dessus est utilisable dans n'importe quelle bande de fréquences, on peut citer à titre d'exemples les bandes de fréquences classiquement utilisées par les systèmes de télécommunications par satellite, telles que : C, L, S, X, Ku, Ka, Q/V. L'invention est également utilisable dans n'importe quelle bande de longueurs d'ondes optiques, et n'est pas limitée à un type particulier d'orbite terrestre.

En outre, l'invention a été décrite en considérant un module de réception passerelle 51 (et, le cas échéant, un module d'émission passerelle 57) adapté à échanger des données avec des stations passerelles 30 terrestres. Rien n'exclut cependant, suivant d'autres exemples, de considérer une ou plusieurs stations passerelles embarquées dans des satellites, la charge utile 50 comportant alors au moins un module de réception passerelle 51 (et, le cas échéant, au moins un module d'émission passerelle 57) adapté à échanger des données sur une liaison inter-satellite.

## Revendications

1. Charge utile (50) de satellite d'un système (10) de télécommunications par satellite, ladite charge utile (50) comportant un module de réception passerelle (51) adapté à recevoir des données d'une station passerelle (30) et un module d'émission utilisateur (53) adapté à émettre lesdites données vers des terminaux utilisateurs (40) terrestres, ledit module d'émission utilisateur (53) comportant:
- une matrice asymétrique de commutation (54) comportant N ports d'entrée et N·M ports de sortie, ladite matrice asymétrique de commutation étant adaptée à router des signaux reçus sur lesdits N ports d'entrée vers un ensemble modifiable de N ports de sortie parmi les N·M ports de sortie, ladite matrice asymétrique de commutation comportant L sous-matrices asymétriques (540) agencées en parallèle, chaque sous-matrice asymétrique (540) comportant N/L ports d'entrée de la matrice asymétrique de commutation et N·M/L ports de sortie de ladite matrice asymétrique de commutation (54),
- une antenne multifaisceaux (55) adaptée à former N·M faisceaux statiques comportant N·M ports d'entrée associés respectivement auxdits N·M faisceaux statiques, lesdits N·M ports d'entrée de l'antenne multifaisceaux étant reliés respectivement aux N·M ports de sortie de la matrice asymétrique de commutation (54),
- des amplificateurs de puissance intégrés dans l'antenne multifaisceaux (55) ou agencés entre ladite antenne multifaisceaux et la matrice asymétrique de commutation (54),
la charge utile comportant en outre un circuit de traitement numérique (52) comportant un port d'entrée relié au module de réception passerelle (51) et N ports de sortie reliés respectivement aux N ports d'entrée de la matrice asymétrique de commutation (54), configuré pour dé-multiplexer des signaux reçus multiplexés par le module de réception passerelle (51), et pour répartir lesdits signaux sur des ports d'entrée différents de la matrice asymétrique de commutation (54).

2. Charge utile (50) selon la revendication 1, dans laquelle l'antenne multifaisceaux (55) est du type comportant un réflecteur (551) et un réseau de sources (550) à amplificateurs de puissance intégrés, chaque faisceau étant formé au moyen de plusieurs sources, des sources étant partagées entre plusieurs faisceaux.

3. Charge utile (50) selon la revendication 2, dans laquelle l'antenne multifaisceaux (55) comporte une lentille de Rotman.

4. Charge utile (50) selon l'une des revendications précédentes, dans laquelle la matrice asymétrique de commutation (54) est constituée de commutateurs à semi-conducteurs.

5. Charge utile (50) selon l'une des revendications précédentes, comportant au moins deux modules de réception passerelle (51), adaptés à recevoir des données émises par des stations passerelles respectives différentes, reliés à des ports d'entrée respectifs différents du circuit de traitement numérique (52).

6. Charge utile (50) selon la revendication 5, dans laquelle l'un au moins des modules de réception passerelle (51) est adapté à recevoir des données sous la forme de signaux optiques.

7. Charge utile (50) selon la revendication 5, comportant au moins un module de réception passerelle adapté à recevoir des données sous la forme de signaux optiques et au moins un module de réception passerelle adapté à recevoir des données sous la forme de signaux radioélectriques.

8. Charge utile (50) selon la revendication 5, dans lequel l'un au moins des modules de réception passerelle (51) est adapté à recevoir des données sous la forme de signaux radioélectriques et comporte une antenne de réception montée sur des moyens de pointage mécaniques adaptés à modifier une direction de pointage de ladite antenne de réception.

9. Charge utile (50) selon l'une des revendications précédentes, dans laquelle le circuit de traitement numérique (52) est configuré pour dé-multiplexer des signaux reçus multiplexés en fréquences par le module de réception passerelle (51), et pour répartir lesdits signaux sur des ports d'entrée différents de la matrice asymétrique de commutation (54).

10. Charge utile (50) selon l'une des revendications précédentes, dans laquelle le circuit de traitement numérique (52) est configuré pour adapter des filtres numériques de démultiplexage des signaux reçus à la largeur fréquentielle des spectres desdits signaux reçus.

11. Charge utile (50) selon l'une des revendications précédentes, dans laquelle N est égal ou supérieur à 100 et M est égal ou supérieur à 10.

12. Satellite (20) d'un système de télécommunications par satellite, comportant une charge utile (50) selon l'une des revendications précédentes.

## Patentansprüche

1. Nutzlast (50) eines Satelliten eines Telekommunikationssystems (10) über Satellit, wobei die Nutzlast (50) ein Gateway-Empfangsmodul (51) beinhaltet, das angepasst ist, um Daten einer Gateway-Station (30) zu empfangen, und ein Nutzer-Sendemodul (53), das angepasst ist, um die Daten zu terrestrischen Benutzerendgeräten (40) zu senden, wobei das Nutzer-Sendemodul (53) Folgendes beinhaltet:
- eine asymmetrische Umschaltmatrix (54), die N Eingangs-Ports und N*M Ausgangs-Ports beinhaltet, wobei die asymmetrische Umschaltmatrix angepasst ist, um an den N Eingangs-Ports empfangene Signale zu einer veränderbaren Einheit von N Ausgangs-Ports unter den N*M Ausgangs-Ports zu routen, wobei die asymmetrische Umschaltmatrix L asymmetrische Teilmatrizen (540) beinhaltet, die parallel angeordnet sind, wobei jede asymmetrische Teilmatrix (540) N/L Ausgangs-Ports der asymmetrischen Umschaltmatrix (540), und N*M/L Ausgangs-Ports der asymmetrischen Umschaltmatrix (54) beinhaltet,
- eine Mehrstrahl-Antenne (55), die angepasst ist, um N*M statische Strahlen zu bilden, die N*M Eingangs-Ports beinhalten, die jeweils den N*M statischen Strahlen zugeordnet sind, wobei die N*M Eingangs-Ports der Mehrstrahl-Antenne jeweils mit den N*M Ausgangs-Ports der asymmetrischen Umschaltmatrix (54) verbunden sind,
- Leistungsverstärker, die in der Mehrstrahl-Antenne (55) integriert sind, oder zwischen der Mehrstrahl-Antenne und der asymmetrischen Umschaltmatrix (54) angeordnet sind, wobei die Nutzlast weiter eine digitale Verarbeitungsschaltung (52) beinhaltet, die einen Eingangs-Port beinhaltet, der mit dem Gateway-Empfangsmodul (51) verbunden ist, und N Ausgangs-Ports, die jeweils mit den N Eingangs-Ports der asymmetrischen Umschaltmatrix (54) verbunden sind, konfiguriert, um die von dem Gateway-Empfangsmodul (51) empfangenen gemultiplexten Signale zu entmultiplexen, und um die Signale auf die verschiedenen Eingangs-Ports der asymmetrischen Umschaltmatrix (54) zu verteilen.

2. Nutzlast (50) nach Anspruch 1, wobei die Mehrstrahl-Antenne (55) von dem Typ ist, der einen Reflektor (551) und ein Quellennetzwerk (550) mit integrierten Leistungsverstärkern beinhaltet, wobei jeder Strahl anhand mehrerer Quellen gebildet wird, wobei Quellen zwischen mehreren Strahlen geteilt werden.

3. Nutzlast (50) nach Anspruch 2, wobei die Mehrstrahl-Antenne (55) eine Rotman-Linse beinhaltet.

4. Nutzlast (50) nach einem der vorstehenden Ansprüche, wobei die asymmetrische Umschaltmatrix (54) aus Halbleiter-Umschaltern gebildet ist.

5. Nutzlast (50) nach einem der vorstehenden Ansprüche, mindestens zwei Gateway-Empfangsmodule (51) beinhaltend, die angepasst sind, um Daten zu empfangen, die von den jeweiligen verschiedenen Gateway-Stationen gesendet werden, die mit jeweiligen verschiedenen Eingangs-Ports der digitalen Verarbeitungsschaltung (52) verbunden sind.

6. Nutzlast (50) nach Anspruch 5, wobei mindestens eines der Gateway-Empfangsmodule (51) angepasst ist, um Daten in Form von optischen Signalen zu empfangen.

7. Nutzlast (50) nach Anspruch 5, mindestens ein Gateway-Empfangsmodul beinhaltend, das angepasst ist, um Daten in Form von optischen Signalen zu empfangen und mindestens ein Gateway-Empfangsmodul, das angepasst ist, um Daten in Form von funkelektrischen Signalen zu empfangen.

8. Nutzlast (50) nach Anspruch 5, wobei mindestens eines der Gateway-Empfangsmodule (51) angepasst ist, um Daten in Form von funkelektrischen Signalen zu empfangen, und eine Empfangsantenne beinhaltet, die auf mechanischen Lenkmitteln montiert ist, die angepasst sind, um eine Lenkrichtung der Empfangsantenne zu verändern.

9. Nutzlast (50) nach einem der vorstehenden Ansprüche, wobei die digitale Verarbeitungsschaltung (52) konfiguriert ist, um die von dem Gateway-Empfangsmodul (51) empfangenen Frequenzmultiplex-Signale zu entmultiplexen, und um die Signale auf die verschiedenen Eingangs-Ports der asymmetrischen Umschaltmatrix (54) zu verteilen.

10. Nutzlast (50) nach einem der vorstehenden Ansprüche, wobei die digitale Verarbeitungsschaltung (52) konfiguriert ist, um digitale Filter zum Entmultiplexen der empfangenen Signale der Frequenzbreite der Spektren der empfangenen Signale anzupassen.

11. Nutzlast (50) nach einem der vorstehenden Ansprüche, wobei N größer oder gleich 100 ist und M größer oder gleich 10 ist.

12. Satellit (20) eines Telekommunikationssystems über Satellit, eine Nutzlast (50) nach einem der vorstehenden Ansprüche beinhaltend.

## Claims

1. Satellite payload (50) of a satellite telecommunications system (10), said payload (50) comprising a gateway reception module (51) adapted to receive data from a gateway station (30) and a user transmission module (53) adapted to transmit said data to terrestrial user terminals (40), said user transmission module (53) comprising:
- an asymmetric switching matrix (54) comprising N input ports and N·M output ports, said asymmetric switching matrix being adapted to route signals received over said N input ports to a modifiable set of N output ports from among the N·M output ports, said asymmetric switching matrix comprising L asymmetric sub-matrices (540) arranged in parallel, each asymmetric sub-matrix (540) comprising N/L input ports of the asymmetric switching matrix and N·M/L output ports of said asymmetric switching matrix (54),
- a multi-beam antenna (55) adapted to form N·M static beams comprising N·M input ports respectively associated with said N·M static beams, said N·M input ports of the multi-beam antenna being respectively connected to the N·M output ports of the asymmetric switching matrix (54),
- power amplifiers integrated in the multi-beam antenna (55) or arranged between said multi-beam antenna and the asymmetric switching matrix (54),
the payload further comprising a digital processing circuit (52) comprising an input port connected to the gateway reception module (51) and N output ports respectively connected to the N input ports of the asymmetric switching matrix (54), configured to demultiplex received signals multiplexed by the gateway reception module (51), and to distribute said signals over various input ports of the asymmetric switching matrix (54) .

2. Payload (50) according to claim 1, wherein the multi-beam antenna (55) is of the type that comprises a reflector (551) and a feed array (550) with integrated power amplifiers, each beam being formed by means of a plurality of feeds, feeds being shared between a plurality of beams.

3. Payload (50) according to claim 2, wherein the multi-beam antenna (55) comprises a Rotman lens.

4. Payload (50) according to one of the preceding claims, wherein the asymmetric switching matrix (54) is constituted by semi-conductor switches.

5. Payload (50) according to one of the preceding claims, comprising at least two gateway reception modules (51), adapted to receive data transmitted by different respective gateway stations, connected to different respective input ports of the digital processing circuit (52) .

6. Payload (50) according to claim 5, wherein at least one of the gateway reception modules (51) is adapted to receive data in the form of optical signals.

7. Payload (50) according to claim 5, comprising at least one gateway reception module adapted to receive data in the form of optical signals and at least one gateway reception module adapted to receive data in the form of radio signals.

8. Payload (50) according to claim 5, wherein at least one of the gateway reception modules (51) is adapted to receive data in the form of radio signals and comprises a reception antenna mounted on mechanical pointing means adapted to change a pointing direction of said reception antenna.

9. Payload (50) according to one of the preceding claims, wherein the digital processing circuit (52) is configured to demultiplex received signals frequency-multiplexed by the gateway reception module (51), and to distribute said signals over various input ports of the asymmetric switching matrix (54).

10. Payload (50) according to one of the preceding claims, wherein the digital processing circuit (52) is configured to adapt digital filters for demultiplexing the signals received to the frequency bandwidth of the spectra of said signals received.

11. Payload (50) according to one of the preceding claims, wherein N is greater than or equal to 100 and M is greater than or equal to 10.

12. Satellite (20) of a satellite telecommunications system, comprising a payload (50) according to one of the preceding claims.
